# EUROPEAN PATENT APPLICATION

(11) **EP 3 384 775 A1**
(43) Date of publication of application: **10.10.2018**
(21) Application number: 18163378.5
(22) Date of filing: 22.03.2018
(51) Int. Cl.: A21B 1/40, F24C 1/02

(54) **OVEN FOR COOKING FOODS AND HEATING METHOD OF AN OVEN FOR COOKING FOODS**

(30) Priority: 30.03.2017 IT 201700035167
(71) Applicant: ING. POLIN & C. S.p.A., 37135 Verona (IT)
(72) Inventor: COMETTI, Cesare, 37135 VERONA (IT)
(74) Representative: Anselmi, Davide

(57) **Abstract**

An oven (1) for cooking foods comprising at least two distinct cooking chambers (2) and heating means (7) of the electrical type associated with each chamber and controllable separately and heating means (14) of the combustion type univocally controllable to heat the cooking chambers (2) until reaching a predefined base temperature (TB). A control unit (13) is configured to maintain active the heating means (14) of the combustion type during the activation and following the reaching of a predefined cooking temperature TC by the first and/or the second heating means (7) of the electrical type, so as to ensure the maintenance of a base temperature (TB) inside the cooking chambers of the oven (1) through the heating means (14) of the combustion type and adjust the temperature through the heating means (7) of the electrical type.

## Description

The present invention relates to an oven for cooking foods and a heating method of an oven for cooking foods, preferably bakery and confectionery products.

In particular, the sector in which the present invention is included is that of industrial electric ovens (for artisan bakeries) for baking bread, pizza or confectionery.

In detail, the present invention relates to ovens having at least one cooking chamber and at least two types of heating means (e.g. electric type and combustion type).

Preferably, the present invention relates to ovens with various cooking chambers, preferably superimposed (often also referred to as "multiple-deck" or "multi-chamber" ovens) so as to cook various products in parallel and, especially so as to set different temperature conditions (e.g. bottom chamber at 250°C and top chamber at 200°C).

Deck ovens currently exist with separate cooking chambers that are electrically powered (through sets of resistors) that have the possibility to regulate each individual chamber independently.

However, this first known technique has some drawbacks substantially related to the fact that electricity has a high cost with respect to fuels such as diesel or wood, without considering the fact that the best cooking of food is actually obtained by burning fuels.

In accordance with a second known technique, multi-chamber combustion ovens exist that comprise a tube bundle that forms a circuit passing through the various chambers, in which the steam flows or generally a fluid heated by a single heat source arranged upstream that burns fuel (gas, diesel, wood, pellets, ...). Alternatively, the oven comprises a manifold into which the smoke passes and a plurality of conduits that extend from the manifold towards each chamber to convey the heat coming from the fumes themselves (cyclothermic).

In this type of ovens the temperature of the various chambers is the same as the chambers cannot have different temperatures. Furthermore, in this type of ovens, it is not possible to perform a dynamic temperature regulation of the ceiling and bedplate of each cooking chamber. In fact, there is a single tube bundle and it passes through all the chambers. At most, the regulations (ceiling/bedplate ratio) are calibrations that are performed during the installation of an oven and that remain fixed or can be regulated with a dedicated intervention.

Therefore, this second known technique solves the problem of consumptions and the cooking quality as fuels are burned, however, it does not allow the cooking in the individual chambers to be diversified. This also implies the impossibility to optimise consumptions, as the oven must be heated in the same way and therefore to the temperature required by the highest temperature cooking cycle. Furthermore, it does not allow precise temperature regulation, e.g. on the ceiling or on the bedplate.

A third technique known from document FR2758385 envisages realising a "bi-energy" oven in which two heating systems are combined together, i.e. resistors and tubes for conveying the steam deriving from combustion. In particular, the oven heating step envisages using only steam until a working temperature is reached. After this, the burner is turned off and only the resistors are used to maintain the desired temperature.

However, the latter known technique has some drawbacks related to the fact that, once the oven has been started, the temperature is maintained by the resistors (for most of the time) and therefore there is a continuous waste of electrical energy. Furthermore, once the burner has been turned off, it is necessary to restart it for the subsequent cycle with significant losses of time.

Furthermore, in such known technique, it is not possible to differentiate between the temperature inside the chamber itself (e.g. bedplate, ceiling) as a function of the type of product to be cooked.

In this situation, the object of the present invention is to realise an oven for cooking foods and a heating method of an oven that obviates the above-cited drawbacks.

It is in particular an object of the present invention to realise an oven for cooking foods and a heating method of an oven that allows the energy consumptions to be optimised throughout the whole cooking cycle and that allows, at the same time, the temperature control to be differentiated in the various chambers.

The objects indicated are substantially attained by an oven for cooking foods and a heating method of an oven according to what is described in the appended claims.

Further characteristics and advantages of the present invention will be more evident from the detailed description of some preferred, but not exclusive, embodiments of an oven for cooking foods and a heating method of an oven illustrated in the appended drawings, in which:
- figure 1 shows a front view of the oven according to the present invention with some parts sectioned;
- figure 2 shows a side view of a section of the oven of figure 1 according to the line of section I-I;
- figure 3 shows a schematic view of a heating and cooking cycle of the oven according to the present invention.

Referring to the figures mentioned, the reference numeral 1 denotes as a whole an oven for cooking foods according to the present invention.

As already previously mentioned, the oven 1 comprises at least one cooking chamber 2 in which the foods are inserted for cooking.

In the preferred embodiment represented in the appended figures, the oven 1 is of the multi-chamber type and comprises at least two distinct cooking chambers 2 (in the example illustrated in the figures there are four of them). In the appended figures, it is possible to see that the cooking chambers 2 are superimposed with each other. However, in other embodiments they may be flanked or arranged in another way.

Each cooking chamber 2 is delimited superiorly by a top wall 3, inferiorly by a cooking plane 4 and laterally by side walls 5. At a front side there is also an access mouth 6 and a related door to allow access thereto or not. Furthermore, each cooking chamber 2 is associated with two types of heating means: primary heating means 14 and secondary heating means 7. Each of said heating means has its own use index of convenience which is evaluated based on one or more of the following criteria:
- temperature increase that is to be performed (temperature gap);
- least expensive energy;
- period of use (e.g. electricity by day costs less if the system is connected to a photovoltaic source);
- energy that has higher or lower performance levels (according, for example, to the need to heat the cooking chamber as quickly as possible);
- other parameters not expressly cited herein.

Therefore, in some situations the primary heating means 14 may have a better index of convenience with respect to the secondary heating means or vice versa.

In other words, the choice of heating means is dynamic as the index of convenience could vary as a function of the conditions.

For example, to bring the cooking chamber 2 to a certain temperature, in some situations it could be more advantageous to use the primary heating means whereas in other situations it could be more advantageous to use the secondary heating means.

The preferred embodiment is described below wherein the primary heating means 14 always has a greater index of convenience with respect to the secondary heating means 7.

Both the primary and the secondary heating means are configured to bring heat into the cooking chamber.

In the example shown in the appended figures, the primary heating means 14 is preferably of the combustible type (burner with gas, wood or the like) whereas the secondary heating means 7 is preferably of the electrical type.

The latter is preferably split into two parts for each chamber and comprises bedplate heating elements 8 arranged at a cooking plane and ceiling heating elements 9 arranged at the top wall 3. Such heating elements comprise sets of electrical resistors.

The secondary heating means 7 of each cooking chamber 2 is electrically powered and is controlled independently from each other so as to be able to heat the cooking chambers 2 differently as a function of the production requirements. Furthermore, each cooking chamber 2 preferably has an independent or predetermined regulation of the heat generated by the ceiling or bedplate heaters (it is possible to heat one part more than the other and vice versa). In other words, the secondary heating means 7 is configured for differentiating the heating inside the cooking chamber 2 between the ceiling and the bedplate.

Furthermore, each cooking chamber 2 comprises at least one temperature detector 10, 11, 12, 16 associated with the internal volume of the chamber itself.

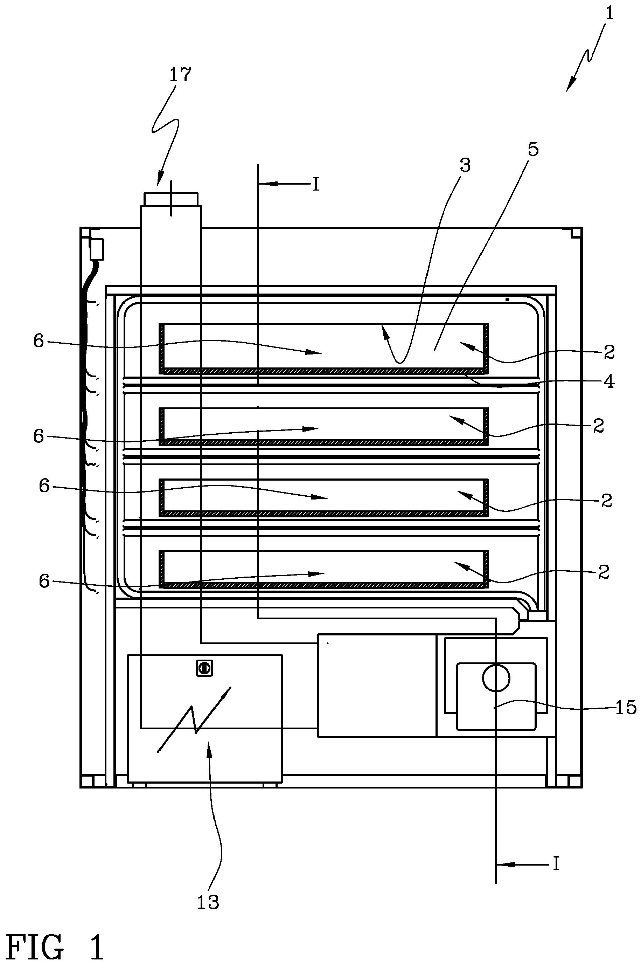

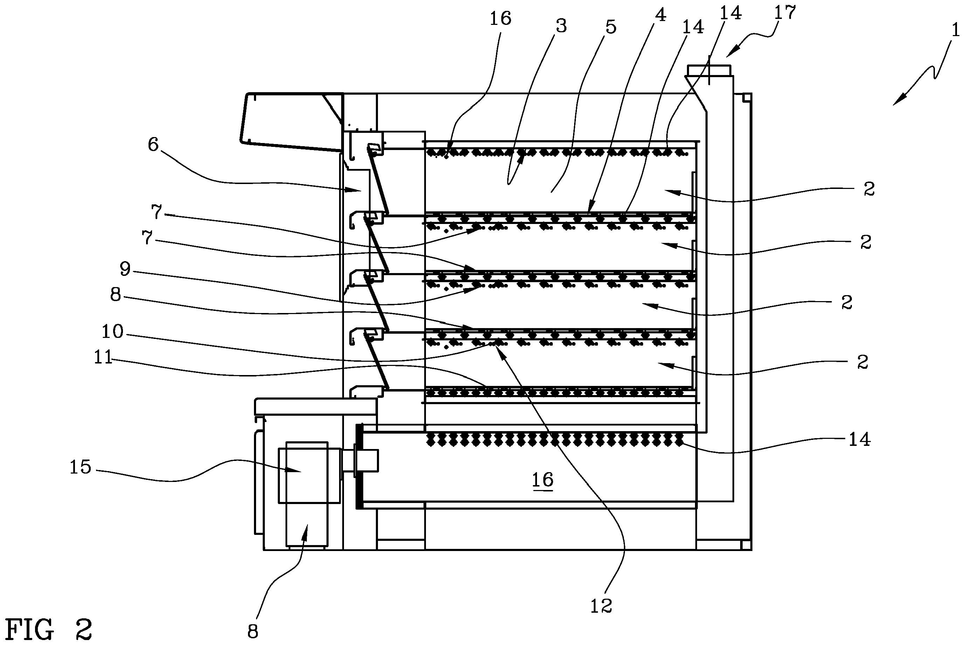

In particular, each chamber comprises a lower temperature detector 10 arranged in proximity to the cooking plane and configured to measure the temperature in a lower zone of the cooking chamber 2. Such temperature detector 10 is configured to generate a signal for detecting the lower temperature containing data relating to the lower temperature detected and for sending it to a control unit 13. It is to be noted that such control unit 12 could be a separate entity (as represented in figures 1 and 2) or it could be mounted directly on board the user control interface board of the chambers 2.

Additionally, each chamber also comprises an upper temperature detector 11 arranged in proximity to the upper heating means and configured to measure the temperature in an upper zone of the cooking chamber 2 spaced apart and arranged above the cooking plane. Preferably, the upper temperature detector 11 is arranged in proximity to the upper wall such as, for example, in a top corner.

Also in this case, the temperature detector 11 is configured to generate a signal for detecting the upper temperature containing data relating to said upper temperature and for sending it to the control unit 13.

Furthermore, the figures show a further detector 16 for each chamber arranged in proximity to the access mouth 6. Such additional detector 16 is configured to detect the temperature at the mouth 6 of the cooking chamber 2 and to send a detection signal to the control unit 13 which manages the regulation of the secondary heating means 7 as a function of said detection.

Preferably, each temperature detector (bedplate, ceiling or mouth) comprises a thermocouple that detects the temperature of the relative zone of the chamber 2 and generates the detection signal. As set forth below, the lower 10, upper 11 and mouth temperature detectors allow the temperature of the bedplate, ceiling and mouth, respectively, to be controlled.

As for the primary heating means 14, it comprises heating members passing at least into a cooking chamber 2 and configured to heat the cooking chamber 2 until a predefined base temperature TB is reached.

In the preferred embodiment illustrated in the appended figures, the primary heating means 14 is of the combustion type.

In particular, the heating members branch starting from a single heater 15 of the combustion type which is a part of the heating means. In other words, the heating members comprise conduits that convey a heating fluid, preferably steam. In the preferred case in which the oven 1 comprises various chambers, such conduits enter and exit from one chamber to another. Furthermore, such conduits are preferably arranged at the top wall 3 and/or at the cooking plane of each chamber. Therefore, the supply of heat of the heating means inside the oven 1 can be controlled univocally with respect to the plurality of the cooking chambers 2. In fact, there is preferably only one heater 15.

The burner is connected to a combustion chamber 16 in which a part of the conduits is arranged and a chimney 17 for the exit of the fumes.

In this regard, the heater 15 comprises a gas and/or diesel and/or wood and/or pellet burner.

Furthermore, the oven 1 comprises a control unit 13 operatively connected to the primary heating means 14, to the secondary heating means 7 and connected to the temperature detectors 10, 11, 16. In particular, the control unit 13 receives the detection signals of the various temperature detectors 10, 11, 16 and sends respective control signals to the secondary heating means 7 to activate it or not.

As for the heat generated by the primary heating means 14, the oven 1 preferably comprises a further dedicated temperature detector 12 for detecting the temperature initially generated by the primary heating means 14. Such additional temperature detector 12 is configured to generate a further temperature detection signal.

Preferably, the oven 1 comprises a further temperature detector 12 for each chamber as can be seen in figure 2.

Therefore, the control unit 13 receives one or more further detection signals (as a function of the number of chambers 2 and/or the number of internal zones of each chamber 2), compares them with a preset base temperature TB value and sends a control signal to the secondary heating means 14 to activate it or not as a function of said comparison.

In detail, the control unit 13 is configured for:
- comparing the contents of said further detection signal with every preset cooking temperature TC value for the respective chamber;
- regulating the primary heating means 14 so as to maintain the base temperature TB detected less than or equal to the lowest cooking temperature TC value.

Furthermore, the control unit 13 is configured for:
activating the primary heating means 14;
detecting the internal temperature of each cooking chamber 2 by means of the respective detector 10, 11, 16;
activating the secondary heating means 7 of one or more chambers for raising the temperature of the respective cooking chamber 2 to a predefined cooking temperature TC_{A,B,C} to be reached;
controlling the secondary heating means 7 for maintaining the predefined cooking temperature TC to be reached even following the reaching of the predefined cooking temperature TC.

Furthermore, the control unit 13 is configured to maintain active the primary heating means 14 during the activation and following the reaching of the predefined cooking temperature TC by the secondary heating means 7, so as to ensure the maintenance of a base temperature TB inside the cooking chambers of the oven 1 through the primary heating means 14 and adjust the temperature through the secondary heating means 7.

In other words, the primary heating means 14 remains active throughout the duration of the heating cycle and also, subsequently, during the cooking cycle. In yet other words, the primary heating means 14 remains active simultaneously to the secondary heating means 7 also following the reaching of the base temperature TB.

Preferably, the control unit 13 is configured to set the base temperature TB as the lowest of the cooking temperatures TC_{A,B,C} set for the different chambers or as lower than the lowest one. Alternatively, as will be better described below, at least one cooking temperature of a chamber 2 can be lower than the base temperature TB. In other words, the index of convenience for the primary 14 or secondary 7 heating means could be so favourable with respect to the other heating means 7 or 14 that it is used to raise the base temperature TB further and then a cooling is performed of the chamber 2 that is to reach a cooking temperature TC lower than TB. In particular, the control unit 13 receives the further detection signal of each chamber and compares it with the preset base temperature TB so that the temperature of each chamber connected with the supply of heat by the primary heating means 14 is not higher than the preset base temperature TB. A further increase in heat can be obtained through the use of the secondary heating means 7.

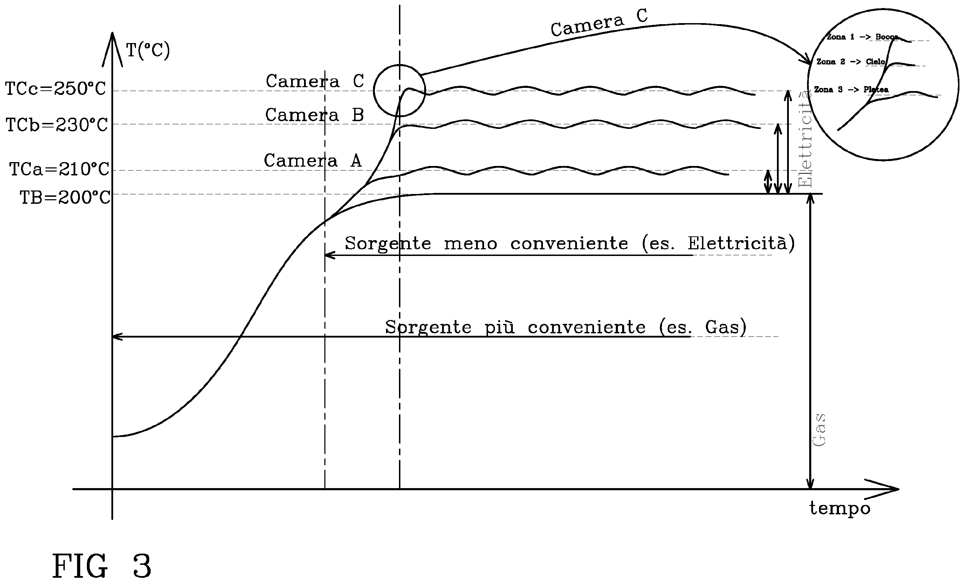

The control unit 13 is preferably configured to perform the heating step of the cooking chambers 2 following two consecutive steps (figure 3):
- during a first step, only the primary heating means 14 is activated to bring one or more cooking chambers 2 to the base temperature TB;
- during a subsequent second step, the primary heating means 14 is maintained active and possibly the secondary heating means 7 is activated for the cooking chamber(s) 2, whereby it is necessary to reach a higher cooking temperature TC than the base temperature TB.

Furthermore, during the subsequent cooking step during which the foods are introduced into one or more of the cooking chambers 2, the control unit 13 is configured for maintaining active both the primary heating means 14 and the secondary heating means 7 simultaneously.

In any case, the control unit 13 is configured for controlling the heating means of each chamber independently from each other.

Precisely, based on two cooking chambers 2, the control unit 13 is configured for (second step):
comparing the temperature detected in a first chamber with a first temperature value to be reached;
activating the secondary heating means 7 as a function of said comparison to bring the temperature inside the first chamber from the base temperature TB to the first temperature value to be reached;
comparing the temperature detected in a second chamber with a second temperature value to be reached;
activating the secondary heating means 7 as a function of said comparison to bring the temperature inside the second chamber to the second temperature value to be reached.

In any case, whether the oven 1 comprises one cooking chamber 2 or various cooking chambers 2, the secondary heating means 7 is configured to refine the internal temperature of the chamber by controlling the temperature of the bedplate and/or the ceiling and/or the mouth.

In other words, the control unit 13 is configured for:
- activating the primary heating means 14 and detecting the temperature of the cooking chamber through the detector 12 for bringing one or more cooking chambers 2 to the base temperature TB;
- activating the secondary heating means 7, and in particular the bedplate heating elements (8) and/or the ceiling heating elements (9) to bring the bedplate or ceiling temperature to respective predefined temperature values.

In this way, the secondary heating means 7 allows the refinement of the internal temperature of the cooking chamber 2 to be obtained which the primary means would not otherwise allow. In the enlargement to the right of figure 3 this exact situation is shown.

It is to be noted that the present invention relates to an oven 1 having at least one or more cooking chambers 2 (as disclosed in the claims) but preferably it relates to ovens having more than two cooking chambers 2. Referring to the possibility to cool at least one cooking chamber, in an alternative embodiment not illustrated in the appended figures, the oven 1 comprises cooling means associated with one or more cooking chambers 2 to lower the base temperature TB of the respective cooking chamber 2 when the respective predefined cooking temperature TC is lower than the base temperature TB. The control unit 13 is configured for:
- deactivating the heating means 14, 7 identified for heating the cooking chamber 2 following the reaching of the base temperature TB;
- activating the cooling means for lowering the internal temperature of the cooking chamber 2 with respect to the base temperature TB.

It is to be noted that such cooling means is preferably defined by an automatic door for one or more cooking chambers 2 that places the cooking chamber 2 in communication with the external environment for cooling. Such door can be opened automatically through controls sent by the control unit 13. Furthermore, the cooling means may also include a fan that promotes the exit of hot air towards the outside.

The present invention further relates to a heating method of the oven 1 described above. Therefore, the method follows directly from the above disclosure which is incorporated below in its entirety.

In particular, the method comprises a step of activating the primary heating means 14 (or that one that has a higher index of convenience for that temperature range) to raise the temperature of the chambers of the oven 1 to the base temperature TB and activating the secondary heating means 7 (or that one that has a higher index of convenience for that temperature range) to raise the temperature of one or more chambers independently from each other from the base temperature TB until reaching the respective cooking temperatures TC.

Furthermore, the method envisages detecting the internal temperature of each chamber and controlling the secondary heating means 7 for maintaining the respective cooking temperatures TC inside the respective cooking chambers 2.

In accordance with the present invention, the method provides to maintain active the primary heating means 14 during the activation step of the secondary heating means 7 and also during the step of maintaining the cooking temperature TC so as to ensure the maintenance of a base temperature TB inside the cooking chambers of the oven 1 through the primary heating means 14 and adjust the temperature through the secondary heating means 7.

In particular, the method provides to set the base temperature TB as the lowest temperature between the cooking temperatures TC to be reached of the individual chambers.

As for the operation of the oven 1, in the preferred embodiment, it is initially heated through the use of the primary heating means 14 (and therefore having a better index of convenience) until reaching the base temperature TB. Then the secondary heating means 7 is activated (which therefore has a worse index of convenience) for one or more cooking chambers 2 which require a further increase in temperature or an internal regulation of the temperature among the ceiling, bedplate and mouth. During the activation and maintenance of the secondary heating means 7, the primary heating means 14 is maintained active so as to guarantee a minimum base temperature TB threshold.

The temperature thermocouples provide data on the internal temperature of each chamber so as to regulate the secondary heating means 7. Preferably, the primary heating means 14 is regulated so that the base temperature TB is the lowest temperature among the cooking temperatures TC of the chambers that are set by the user.

In the preferred embodiment, it is a "multi-chamber" oven 1 of the hybrid type wherein once the cooking temperature TC of each individual chamber is set (possibility also to regulate between ceiling and bedplate) the combustion heating means allows the base temperature TB to be reached, while further temperature increases are provided by the resistor elements.

It is also to be noted that, following the heating step, a baking step takes place of the foods to be cooked in one or more cooking chambers (cooking step). Following the baking step, the internal temperature of the cooking chamber drops. To deal with such a temperature drop, the control unit is configured to act on the primary or secondary heating means or both as a function of requirements. For example, in the case of a multi-chamber oven, if all the chambers have an internal temperature that has dropped below the temperature TB, it is possible to act on the primary heating means that involves all the chambers, whereas if the internal temperature of a part of the chambers has dropped below the temperature TB, it is preferable to act on the secondary heating means. Similarly to the oven 1, the method may envisage a cooling step of one or more cooking chambers 2 to lower the base temperature TB of the respective cooking chamber 2 when the respective predefined cooking temperature TC is lower than the base temperature TB. In particular, the method comprises the further steps of:
- deactivating the heating means 14, 7 identified for heating the cooking chamber 2 following the reaching of the base temperature TB;
- activating said cooling means for lowering the internal temperature of the cooking chamber 2 with respect to the base temperature TB.

The present invention attains the aimed objects.

In particular, the present invention allows the energy efficiency to be optimised as a function of the considered convenience criterion (index of convenience).

In any case, the possibility is maintained of refining the temperature regulation for each individual chamber and, in turn, the temperature to be differentiated inside a same chamber.

In other words, the solution allows total control of the temperature of each chamber being able to use for most of the time the most advantageous energy source (gas, diesel, wood, pellets, ...) and to use the less advantageous one (e.g. electrical energy) only for the refining part of the temperature regulation.

It should also be noted that the present invention is relatively easy to realise and also that the cost related to the implementation of the invention is not very high.

## Claims

1. An oven (1) for cooking foods, comprising:
at least two cooking chambers (2);
primary heating means (14), connected in use to a first energy source and extending through the cooking chambers (2);
secondary heating means (7), connected in use to a second energy source, different from the first energy source, associated with each cooking chamber (2); said heating means (7), (14) being associated with respective indices of convenience determined at least as a function of the type of energy source connected to the respective heating means and at least as a function of the temperature to be reached and of an initial starting temperature of the cooking chamber; said secondary heating means (7) associated with a cooking chamber (2) being controllable independently from the secondary heating means (7) associated with another cooking chamber (2);
at least one temperature detector (10, 11, 12, 16) respectively associated with the internal volume of each cooking chamber (2) so as to detect the internal temperature of the respective cooking chamber (2);
a control unit (13) operatively connected to the primary heating means (14), to the secondary heating means (7) and to the temperature detector; said control unit being configured to control the primary heating means (14) univocally for all the chambers (2) and the secondary heating means (7) independently for each chamber (2);
**characterised in that** said control unit (13) is configured for:
calculating the index of convenience of the primary heating means (14) and the secondary heating means (7) as a function of a precalculated base temperature (TB) to be reached inside the cooking chambers (2);
activating, between primary (14) and secondary (7) heating means, the heating means (7), (14) with the highest index of convenience until reaching the base temperature (TB) common to the cooking chambers (2);
detecting the internal temperature of each cooking chamber (2) by means of the temperature detector (10, 11, 12, 16);
activating the other heating means (7) or (14) at least until reaching the respective cooking temperature (TC_{A}, TC_{B}) of at least one chamber (2);
controlling the primary heating means (14) and/or the secondary heating means (7) for maintaining the predefined cooking temperature (TC_{A}, TC_{B}) to be reached even following the reaching of the predefined cooking temperature (TC_{A}, TC_{B});
maintaining active both the primary heating means (14) and the secondary heating means (7) in at least one chamber following the reaching of the respective predefined cooking temperature (TC) so as to ensure the maintenance of a common base temperature (TB) to the cooking chambers of the oven (1) through the heating means (14) or (7) with a greater index of convenience and so as to differentiate the temperature of one cooking chamber (2) to the other to pass from the base temperature (TB) to the respective cooking temperature (TC_{A}, TC_{B}) through the other heating means (7) or (14).

2. The oven (1) according to claim 1, **characterised in that** the control unit is configured for recalculating the index of convenience of the primary heating means (14) and the secondary heating means (7) following the reaching of the base temperature (TB) so as to bring the internal temperature of each cooking chamber (2) from the base temperature (TB) to a pre-set cooking temperature (TC_{A}, TC_{B}) to be reached and different from the base temperature (TB);
activating at least the heating means with the greater re-calculated index of convenience at least up to reaching the respective cooking temperature (TC_{A}, TC_{B}).

3. The oven (1) according to any one of the preceding claims, **characterised in that** at least one of the primary heating means (14) and the secondary heating means (7) comprises heating elements (8, 9) arranged at different zones of each cooking chamber (2); said heating elements (8, 9) being connected to the control unit (13) which is configured for controlling them independently in order to differentiate the internal temperature of each cooking chamber (2).

4. The oven (1) according to any one of the preceding claims, **characterised in that** it comprises a temperature detector (12) of the temperature (TB) arranged inside each cooking chamber (2) and associated with said heating means adapted to bring the internal temperature of the cooking chamber up to the base temperature (TB); said oven (1) comprising a temperature detector (10, 11, 16) of the temperature (TC) associated with said heating means adapted to bring the internal temperature of the cooking chamber up to the cooking temperature (TC); said control unit (13) being operatively connected to said detectors (10, 11, 12, 16) for controlling the respective heating means (14, 7) as a function of the temperatures detected.

5. The oven (1) according to claim 4, when dependent on claim 3, **characterised in that** it comprises bedplate heating elements (8) arranged at a cooking plane of each cooking chamber (2) and ceiling heating elements (9) arranged at a top of the cooking chamber (2) wherein said heating elements (8, 9) are controllable independently of one another; said oven comprising at least two temperature detectors (10, 11) of the temperature (TC) generated by the secondary heating means (7), respectively configured for detecting the ceiling temperature and the bedplate temperature; said control unit (13) being operatively connected to said detectors (10, 11) and to said heating elements (8, 9) and being configured for operating on the heating elements (8, 9) for reaching a pre-set bedplate temperature or ceiling temperature.

6. The oven (1) according to claim 5, **characterised in that** it comprises a further temperature detector (16) of the temperature (TC) arranged at a mouth (6) of each cooking chamber (2); said control unit (13) being operatively connected to said further temperature detector (16) and to said heating elements (8, 9) and being configured for operating on the heating elements (8, 9) for reaching a pre-set mouth temperature.

7. The oven (1) according to any one of the preceding claims, **characterised in that** the primary heating means (14) has an index of convenience that is greater with respect to the secondary heating means (7); said control unit (13) being configured for activating the primary heating means (14) for reaching the base temperature (TB) and for activating the secondary heating means for reaching the cooking temperature (TC) while maintaining the primary heating means (14) active even following the reaching of the cooking temperature (TC).

8. The oven (1) according to any one of the preceding claims, **characterised in that** the primary heating means (14) is of a combustible type, and the secondary heating means (7) is of the electrical type or vice versa.

9. The oven (1) according to any one of the preceding claims, **characterised in that** the primary heating means (14) comprises heating members which branch starting from a single heater (15) of a combustion type which is a part of the heating means.

10. The oven (1) according to claim 9, **characterised in that** said heating members comprise conduits which convey a heating fluid.

11. The oven (1) according to any one of the preceding claims, **characterised in that** the control unit (13) is configured for determining the base temperature (TB) as the lowest temperature among various pre-set cooking temperatures internally of the cooking chambers (TC_{A}, TC_{B}).

12. The oven (1) according to any one of the preceding claims, **characterised in that** it comprises cooling means associated with one or more cooking chambers (2) for lowering the base temperature (TB) of the respective cooking chamber (2) when the respective predefined cooking temperature chamber (TC) is lower than the base temperature (TB); said control unit (13) being configured to activate said cooling means for lowering the internal temperature of the cooking chamber (2) with respect to the base temperature (TB) following the reaching of the base temperature (TB).

13. A heating method of an oven (1) for cooking foods having at least two cooking chambers (2), comprising the following operating steps:
- providing primary heating means (14), connected in use to a first energy source and extending through the cooking chambers (2);
- providing secondary heating means (7) in each cooking chamber (2) connected in use to a first energy source so that said secondary heating means (7) associated with a cooking chamber (2) is controllable independently from secondary heating means (7) associated with another cooking chamber (2);
- calculating an index of convenience for each of the heating means (7), (14) as a function of the type of energy source connected to respective heating means and at least as a function of the temperature to be reached and of an initial starting temperature of each cooking chamber;
**characterised in that it comprises the following steps:**
calculating the index of convenience of the primary heating means (14) and the secondary heating means (7) as a function of a precalculated base temperature (TB) to be reached inside the cooking chambers (2);
activating at least the heating means (7), (14) having the greater index of convenience up to reaching the base temperature (TB);
detecting the internal temperature of each cooking chamber (2) by means of a respective temperature detector (10, 11, 12, 16);
heating further at least one cooking chamber (2) using the other heating means (14), (7) in order to pass from the base temperature (TB) to the cooking temperature (TC) so as to bring the internal temperature of at least one chamber (2) to a respective cooking temperature (TC_{A}, TC_{B}) different from the base temperature (TB);
controlling the primary heating means (14) and/or the secondary heating means (7) for maintaining the predefined respective cooking temperature (TC_{A}, TC_{B}) to be reached even following the reaching of the predefined respective cooking temperature (TC_{A}, TC_{B});
maintaining active both the primary heating means (14) and the secondary heating means (7) following the reaching of the respective predefined cooking temperature (TC_{A}, TC_{B}) so as to ensure the maintenance of a base temperature (TB) inside the cooking chamber of the oven (1) through the heating means (14) or (7) with a greater index of convenience and so as to differentiate the temperature of one cooking chamber (2) to the other to pass from the base temperature (TB) to the cooking temperature (TC_{A}, TC_{B}) through the other heating means (7) or (14).

14. The method according to claim 13, **characterised in that** it comprises a step of re-calculating the index of convenience of the primary heating means (14) and the secondary heating means (7) following the reaching of the base temperature (TB) so as to bring the internal temperature of each cooking chamber (2) from the base temperature (TB) to a respective pre-set cooking temperature (TC_{A}, TC_{B}) to be reached and different from the base temperature (TB);
activating at least the heating means having the re-calculated greater index of convenience at least up to reaching the respective cooking temperature (TC_{A}, TC_{B}).

15. The method according to one of claims 13 to 14, **characterised in that** it comprises a step of cooling one or more cooking chambers (2) for lowering the base temperature (TB) of the respective cooking chamber (2) when the respective predefined cooking temperature (TC) is lower than the base temperature (TB); said method comprising the further steps of deactivating the heating means (14), (7) identified for heating the cooking chamber (2) following the reaching of the base temperature (TB).
